# EUROPÄISCHE PATENTSCHRIFT

(11) **EP 0 771 713 B1**
(45) Veröffentlichungstag und Bekanntmachung des Hinweises auf die Patenterteilung: **11.12.2002**
(21) Anmeldenummer: 96116844.0
(22) Anmeldetag: 19.10.1996
(51) Int. Cl.: B62D 5/083, B62D 6/02

(54) **Verfahren und Vorrichtung zur Steuerung des Hydraulikdruckes in einer Servolenkvorrichtung**
Method and device for controlling hydraulic pressure of a power steering apparatus
Méthode et dispositif pour la commande de la pression hydraulique dans un appareil de direction assistée

(30) Priorität: 31.10.1995 DE 19540501
(43) Veröffentlichungstag der Anmeldung: 07.05.1997
(73) Patentinhaber: TRW Fahrwerksysteme GmbH & Co. KG, 40547 Düsseldorf (DE)
(72) Erfinder: Eberhart, Eugen, Dipl.-Ing., 40223 Düsseldorf (DE)
(74) Vertreter: Stenger, Watzke & Ring Patentanwälte

(56) Entgegenhaltungen:
- DE-C- 4 201 311
- DE-C- 4 242 441
- PATENT ABSTRACTS OF JAPAN vol. 018, no. 027 (M-1543), 17.Januar 1994 & JP 05 262252 A (KAYABA IND CO LTD), 12.Oktober 1993,

## Beschreibung

Gegenstand der vorliegenden Erfindung ist ein Verfahren zur Steuerung des Hydraulikdruckes in einer Servolenkvorrichtung zum Zuführen von Drucköl an linke und rechte Kammern eines Servozylinders über ein Drehschieberventil mit einer Pumpe, wobei zwischen einer Eingangswelle und einer Steuerhülse des Drehschieberventils ein Reaktionskolben eingeschaltet ist, der axialbeweglich und drehfest auf der Eingangswelle gelagert und über eine elastische Drehmitnahme mit der Steuerhülse verbunden ist, wobei in einer vom Reaktionskolben wegführenden Hydraulikmittelrückflußleitung eine von einer Steuereinheit geschwindigkeitsabhängig gesteuerte hydraulische Reaktionseinrichtung zur Regelung des Reaktionsdruckes angeordnet ist. Weiterhin ist Gegenstand der Erfindung eine Servolenkvorrichtung zur Durchführung des Verfahrens.

Gattungsgemäße Servolenkvorrichtungen sind an sich bekannt, beispielsweise aus der DE 42 42 441 C1. In einer Hydraulikmittelrückflußleitung, die am Gehäuse im Bereich des Reaktionskolbens angeordnet ist und direkt oder indirekt zum Hydraulikmittelreservoir zurückführt, ist eine hydraulische geschwindigkeitsabhängig gesteuerte Reaktionsvorrichtung angeordnet. Dabei handelt es sich in bekannter Weise um ein Magnetventil, welches von einer Steuereinheit geschwindigkeitsabhängig angesteuert wird. Bei kleinen Geschwindigkeiten, beispielsweise beim Parkieren, wird mit Hilfe dieses geschwindigkeitsgesteuerten Magnetventils der Rücklaufdruck erhöht, so daß unter Rückwirkung auf den Reaktionskolben das Handlenkmoment reduziert wird.

Ein Nachteil der vorbekannten Verfahren bzw. Systeme liegt darin, daß der erhöhte Rücklaufdruck auch an den Zahnstangendichtungen anliegt und somit zu einer unerwünschten Erhöhung der Zahnstangenrückstellkraft führt. Dies macht gesonderte Fahrwerksabstimmungen erforderlich, so daß grundsätzlich ein gleiches Zahnstangendurchzugskraftniveau wünschenswert ist.

Ein weiterer Nachteil des erhöhten Rücklaufdruckes liegt in der zwangsläufigen Erhöhung der Öltemperatur. Schließlich werden mit zunehmenden Druck die Geräuschprobleme größer.

Ausgehend von diesem Stand der Technik liegt der vorliegenden Erfindung die **Aufgabe** zugrunde, ein Verfahren zur Steuerung des Hydraulikdruckes in einer gattungsgemäßen Servolenkvorrichtung dahingehend zu verändern, daß bei Vermeidung einer unnötigen Öltemperaturerhöhung möglichst gleichmäßige Zahnstangendurchzugskräfte erzielt werden. Weiterhin wird mit der Erfindung eine entsprechende Servolenkvorrichtung vorgeschlagen.

Verfahrensseitig wird zur technischen **Lösung** vorgeschlagen, daß Veränderungen des Hydraulikdruckes ermittelt und als Steuerparameter für die geschwindigkeitsabhängig gesteuerte hydraulische Reaktionseinrichtung zusätzlich zu dem Parameter Geschwindigkeit verwendet werden.

Mit der technischen Lösung wird verfahrensseitig in vorteilhafter Weise eine einfache Steuerungsvariation vorgeschlagen, wobei zusätzlich zu dem ohnehin verwendeten Parameter Geschwindigkeit der Parameter der Veränderung des Hydraulikdruckes überwacht wird. In vorteilhafter Weise werden die Veränderungen des Systemdruckes überwacht.

Dabei wird der Effekt ausgenutzt, daß bei einem Aktivieren des Drehschieberventils der Systemdruck ansteigt. Im Rückstellzustand der Lenkung hingegen ist das Drehschieberventil in Neutralstellung und der Systemdruck fällt auf den jeweiligen, durch die Steuereinheit vorgesehenen Reaktionsdruck ab.

Der geschwindigkeitsabhängig geregelte Reaktionsdruck wird jedoch grundsätzlich nur benötigt, um das Aktivierungsmoment des Drehschieberventils abhängig von der Geschwindigkeit zu verändern. Insofern kann eine Steuerung der geschwindigkeitsabhängig gesteuerten hydraulischen Reaktionsvorrichtung, beispielsweise des Magnetventils, so erfolgen, daß der Reaktionsdruck nur dann aufgebaut wird, wenn das Drehschieberventil aktiviert wird.

Mit der Erfindung wird somit vorgeschlagen, daß, wenn der ermittelte Systemdruck fällt oder gleich dem Reaktionsdruck ist, die geschwindigkeitsabhängig gesteuerte hydraulische Reaktionsvorrichtung unwirksam gemacht wird. Das heißt, es wird über eine vorgegebene Zeiteinheit der Systemdruck ermittelt. Ergeben sich fallende Werte, wird die geschwindigkeitsabhängig gesteuerte hydraulische Reaktionsvorrichtung unwirksam gemacht, wozu die Erfindung entweder vorschlägt, diese Vorrichtung zu umgehen oder, im Falle eines elektrohydraulischen Elementes stromlos zu machen.

Wird dagegen ein steigender Systemdruck ermittelt, wird die geschwindigkeitsabhängig gesteuerte hydraulische Reaktionsvorrichtung wirksam gemacht.

Zur Ermittlung des Systemdruckes wird gemäß einem Vorschlag der Erfindung ein Drucksensor verwendet. Dieser ist in vorteilhafter Weise zur Ermittlung des Systemdruckes in eine entsprechende Leitung eingesetzt und mit der Steuereinheit verbunden.

Alternativ wird mit der Erfindung in vorteilhafter Weise die Verwendung eines Druckverhältnisregelventiles vorgeschlagen, welches gemäß einem Vorschlag der Erfindung zwischen einer systemdruckführenden und einer reaktionsdruckführenden Leitung angeordnet ist. In vorteilhafter Weise wird das Druckverhältnisregelventil von Systemdruck gesteuert.

Das erfindungsgemäße Verfahren ermöglicht auf einfache Weise die Aktivierung der geschwindigkeitsabhängig gesteuerten hydraulischen Reaktionsvorrichtung in Abhängigkeit vom Systemdruck, so daß nur dann, wenn tatsächlich ein Bedarf an einer Veränderung des Aktivierungsmoments des Drehschieberventiles besteht, ein erhöhter Reaktionsdruck bereitgestellt wird.

Vorrichtungsseitig schlägt die Erfindung zur **Lösung** der Aufgabe vor, eine Servolenkvorrichtung zum Zuführen von Drucköl an linke und rechte Kammern eines Servozylinders über ein Drehschieberventil mit einer Pumpe, wobei zwischen einer Eingangswelle und einer Steuerhülse des Drehschieberventils ein Reaktionskolben eingeschaltet ist, der axialbeweglich und drehfest auf der Eingangswelle gelagert und über eine elastische Drehmitnahme mit der Steuerhülse verbunden ist, wobei in einer vom Reaktionskolben wegführenden Hydraulikmittelrückflußleitung eine von einer Steuereinheit geschwindigkeitsabhängig gesteuerte hydraulische Reaktionseinrichtung zur Regelung des Reaktionsdruckes angeordnet ist, die gekennzeichnet ist durch eine Vorrichtung zur Ermittlung von Veränderungen des Hydraulikdruckes zur Ansteuerung der geschwindigkeitsabhängig gesteuerten hydraulischen Reaktionsvorrichtung.

Eine erfindungsgemäße Servolenkvorrichtung ist auf einfache Weise geeignet, verfahrensgemäß eingesetzt zu werden. In vorteilhafter Weise wird die Vorrichtung zur Ermittlung von Veränderungen des Systemdrucks eingesetzt.

Bei der Vorrichtung kann es sich gemäß einem Vorschlag der Erfindung um ein Druckverhältnisregelventil handeln, welches in vorteilhafter Weise zwischen einer systemdruck- und einer reaktionsdruckführenden Leitung angeordnet und mit einem drucklosen Rücklauf verbunden ist. Wird dieses Druckverhältnisregelventil systemdruckgesteuert, bewirkt es, daß bei einer Neutralstellung des Drehschieberventils das Druckverhältnisregelventil geöffnet ist, weil der Systemdruck dem Reaktionsdruck entspricht. Das Hydrauliköl kann somit drucklos zum Tank zurückfließen. Ist jedoch das Drehschieberventil ausgelenkt, steigt der Systemdruck und verschließt über das Druckverhältnisregelventil den direkten Rücklauf des Öls zum Tank. Dadurch ist das Öl gezwungen, über das geschwindigkeitsgeregelte Magnetventil zu fließen, so daß es zur Lenkunterstützung durch Reaktionsdruckanstieg kommt.

Alternativ wird mit der Erfindung vorgeschlagen, daß die Vorrichtung zur Ermittlung von Veränderungen des Hydraulikdrucks ein Drucksensor ist. Dieser ist in vorteilhafter Weise in einer Systemdruckleitung angeordnet und mit der Steuereinheit verbunden. Diese Steuereinheit regelt dann die geschwindigkeitsabhängig gesteuerte hydraulische Reaktionsvorrichtung, beispielsweise das Magnetventil, in Abhängigkeit von der Geschwindigkeit und den Veränderungen des Systemdrucks.

Mit der Erfindung wird durch einfache Veränderungen an sich bekannter Servolenkventile ein Servolenkventil eines neuartigen Typs bereitgestellt, bei welchem Reaktionsdruckveränderungen nur im Bedarfsfall produziert werden.

Weitere Vorteile und Merkmale der Erfindung ergeben sich aus der folgenden Beschreibung anhand der Figuren. Dabei zeigen:
- Figur 1: eine schematische Darstellung eines Ausführungsbeispieles der Erfindung und
- Figur 2: eine schematische Darstellung eines alternativen Ausführungsbeispiels der Erfindung.

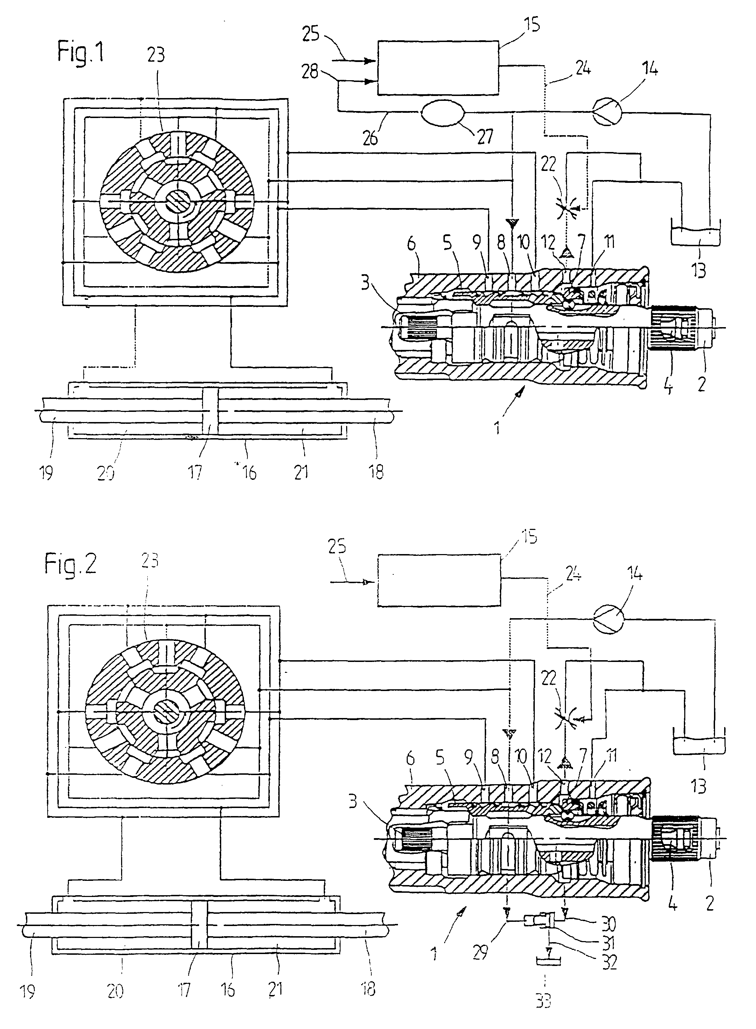

Die in den Figuren 1 und 2 gezeigten Servolenkvorrichtungen sind vom Grundaufbau her gleich. Beide weisen die gleichen mit Bezugsziffern 1 bis 25 bezeichneten Elementen auf, die im folgenden beschrieben werden.

Das Servolenkventil 1 umfaßt eine Eingangswelle 2 und eine Ausgangswelle 3, die beide mittels eines Torsionsstabes 4 miteinander verbunden und somit über einen gewissen Drehwinkel relativ zueinander verdrehbar sind. Mit der Ausgangswelle 3 ist starr eine Ventilhülse 5 verbunden, die somit ebenfalls relativ zur Eingangswelle 2 verdrehbar ist. Diese Elemente sind in einem Gehäuse 6 angeordnet, wobei einerseits relativ zur Eingangswelle 2 unverdrehbar, aber gegenüber dieser axial verschiebbar ein Reaktionskolben 7, im gezeigten Ausführungsbeispiel durch eine Feder belastet, angeordnet ist.

Hydraulikdruck wird über eine Zuführleitung 8 an das System angelegt. Durch in der Ventilhülse und der Eingangswelle ausgebildete Steuernuten bzw. Steuerbohrungen wird der Hydraulikdruck je nach Steuereinschlag den Steuerleitungen 9 und 10 zugeführt, um ein Lenkgetriebe 16 zu betätigen. Zwei Rückflußleitungen 11 und 12 sind einmal an der Vorderseite, einmal an der Rückseite des Reaktionskolbens 7 ausgebildet. Das Hydraulikmittel wird von einem Tank 13 über eine Pumpe 14 in den Kreislauf gepumpt und in den Tank 13 zurückgeführt. Eine Steuereinheit 15 steuert aufgrund eines Geschwindigkeitssignals 25 ein in der Rückführleitung 12 angeordnetes Magnetventil 22.

Beim Parkieren bzw. bei kleinen Geschwindigkeiten wird der Rücklaufdruck des Hydraulikmittels mit Hilfe des geschwindigkeitsgesteuerten Magnetventils 22 erhöht, um somit über den Reaktionskolben 7 das Handlenkmoment zu reduzieren.

In den Figuren ist eine Schnittansicht 23 als Funktionsdarstellung gezeigt, ebenso wie schematisch das Lenkgetriebe 16. Es zeigt sich somit, daß, beim beispielsweise in den Figuren gezeigten Lenkeinschlag nach links eine relative Verdrehung zwischen der Eingangswelle und der Ventilhülse stattfindet, so daß die Steuernuten so geöffnet werden, daß in die linke Druckkammer 20 des Lenkgetriebes 16 Hydraulikdruck geleitet wird. Dies erfolgt über die Zuführleitung 8 und die Steuerleitung 10.

Das Lenkventil 16 weist einen Kolben 17 mit beidseitig angeordneten Kolbenstangen 18 und 19 auf, welche das Getriebevolumen in die zwei Druckkammern 20 und 21 aufteilt. Je nachdem, auf welche Seite der Druck geleitet wird, bewegt sich die Kolbenstange. Im gezeigten Ausführungsbeispiel bewegt sich die Kolbenstange in der Bildebene gesehen nach rechts. Folglich wird über die rechte Druckkammer 21 und die Steuerleitung 9 eine Rückführung erfolgen, die über die Leitung 11 bzw. 12 geführt ist. Bei niedrigen Geschwindigkeiten wird, wie beschrieben, über das geschwindigkeitsgesteuerte Magnetventil der Rücklaufdruck erhöht. Dieser erhöhte Rücklaufdruck liegt folglich jedoch an den Zahnstangendichtungen an und führt somit zu einer unerwünschten Erhöhung der Zahnstangenrückstellkraft. Je nach Lenkungstyp kann die Krafterhöhung bis zu 50 % des üblichen Wertes betragen. Weiterhin wird die Öltemperatur erhöht und es treten zunehmend Geräusche auf.

Bei dem in Figur 1 gezeigten Ausführungsbeispiel ist nun in der Systemdruckzuführleitung 8 ein Drucksensor 27 angeordnet, so daß über eine Regelleitung 26 ein Drucksignal 28 der Steuereinheit 15 zugeführt wird. An der Steuereinheit liegt somit das Geschwindigkeitssignal und das Systemdrucksignal an. Das Drucksignal wird über einen festzulegenden Zeitraum ermittelt. Bei über einem festzulegenden Zeitraum abfallenden Druckwerten wird der Magnetstrom auf 0 gesetzt, bei ansteigenden Druckwerten ist der Magnetstrom wie bisher abhängig von der Fahrzeuggeschwindigkeit. Somit findet eine geschwindigkeitsabhängige Druckänderung nur dann statt, wenn tatsächlich ein Bedarf besteht, nämlich um das Aktivierungsmoment des Drehschieberventils abhängig von der Geschwindigkeit zu verändern. Das Aktivieren selbst führt zu einem Ansteigen des Systemdrucks, so daß es zu der beschriebenen Magnetventilfunktion kommt. In Neutralstellung fällt der Systemdruck auf den durch die Steuereinheit vorgesehenen Reaktionsdruck ab, so daß die Magnetventilfunktion durch Stromlos-Schaltung des Magnetventils ausgeschaltet ist.

Eine alternative Problemlösung bei einem gattungsgemäßen Servolenkventil ist in Figur 2 gezeigt.

Hier ist zwischen eine systemdruckführende Druckleitung 29 und einer reaktionsdruckführenden Druckleitung 30 ein Druckverhältnisregelventil angeordnet, welches vom Systemdruck gesteuert ist. Dieses Regelventil weist eine Rückführleitung 32 zu einem Tank 33 auf, der selbstverständlich dem Tank 13 entsprechen kann und nur zu Zwecken der Deutlichkeit als separates Element gezeigt ist.

Beim Parkieren und langsamen Fahren mit ausgelenktem Drehschieberventil wird durch die Aktivierung des Drehschieberventils der Systemdruck angehoben und verschließt über das Druckverhältnisregelventil 31 den direkten Rücklauf des Öls zum Tank. Dadurch ist das Öl gezwungen, über das geschwindigkeitsgeregelte Magnetventil zu fließen, wodurch in bekannter Weise der Rücklauf entsprechend der Stromverstärkungskurve und der Geschwindigkeit gestaut wird, was zur Lenkmomentsteuerung genutzt wird.

Beim Parkieren bzw. langsamen Fahren und in Neutralstellung befindlichen Lenkventil sind der angestaute Reaktionsdruck in der Reaktionskammer gleich groß. Somit wird durch den Reaktionsdruck und über das entsprechend vorgesehene Flächenverhältnis das Druckregelverhältnisventil geöffnet und das Öl kann drucklos zum Tank zurückfließen. Das Magnetventil wird somit umgangen.

Die in Figur 2 gezeigte Lösung ist überaus kostengünstig.

### Bezugszeichenliste:

- 1: Servolenkventil
- 2: Eingangswelle
- 3: Ausgangswelle
- 4: Torsionsstab
- 5: Ventilhülse
- 6: Gehäuse
- 7: Reaktionskolben
- 8: Zuführleitung
- 9: Steuerleitung
- 10: Steuerleitung
- 11: Rückführleitung
- 12: Rückführleitung
- 13: Tank
- 14: Pumpe
- 15: Steuereinheit
- 16: Lenkgetriebe
- 17: Kolben
- 18: Kolbenstange
- 19: Kolbenstange
- 20: Druckkammer
- 21: Druckkammer
- 22: Magnetventil
- 23: Schnittansicht
- 24: Regelleitung
- 25: Geschwindigkeitssignal
- 26: Regelleitung
- 27: Drucksensor
- 28: Drucksignal
- 29: Druckleitung
- 30: Druckleitung
- 31: Druckverhältnisregelventil
- 32: Rückführleitung
- 33: Tank

## Patentansprüche

1. Verfahren zur Steuerung des Hydraulikdrucks in einer Servolenkvorrichtung zum Zuführen von Drucköl an linke und rechte Kammern (20, 21) eines Servozylinders über ein Drehschieberventil (1) mit einer Pumpe (14), wobei zwischen einer Eingangswelle (2) und einer Steuerhülse (5) des Drehschieberventils ein Reaktionskolben (7) eingeschaltet ist, der axialbeweglich und drehfest auf der Eingangswelle gelagert und über eine elastische Drehmitnahme mit der Steuerhülse (5) verbunden ist, wobei in einer vom Reaktionskolben (7) wegführenden Hydraulikmittelrückflußleitung eine von einer Steuereinheit (15) geschwindigkeitsabhängig gesteuerte hydraulische Reaktionseinrichtung zur Regelung des Reaktionsdruckes angeordnet ist,
**dadurch gekennzeichnet,**
**daß** die Veränderungen des Hydraulikdrucks ermittelt und als Steuerparameter für die geschwindigkeitsabhängig gesteuerte hydraulische Reaktionsvorrichtung zusätzlich zum Parameter Geschwindigkeit verwendet werden.

2. Verfahren nach Anspruch 1, **dadurch gekennzeichnet, daß** die Veränderungen des Systemdruckes ermittelt werden.

3. Verfahren nach einem der vorhergehenden Ansprüche, **dadurch gekennzeichnet, daß** bei einem fallenden oder dem Reaktionsdruck entsprechenden Systemdruck die geschwindigkeitsabhängig gesteuerte hydraulische Reaktionsvorrichtung unwirksam gemacht wird.

4. Verfahren nach Anspruch 3, **dadurch gekennzeichnet, daß** die geschwindigkeitsabhängig gesteuerte hydraulische Reaktionsvorrichtung durch Umgehung unwirksam gemacht wird.

5. Verfahren nach Anspruch 3, **dadurch gekennzeichnet, daß** im Falle der Verwendung einer elektrohydraulischen, durch die Geschwindigkeit gesteuerten Reaktionsvorrichtung diese durch Unterbrechung der Stromzufuhr unwirksam gemacht wird.

6. Verfahren nach einem der vorhergehenden Ansprüche, **dadurch gekennzeichnet, daß** bei steigendem Systemdruck die geschwindigkeitsabhängig gesteuerte hydraulische Reaktionsvorrichtung wirksam gemacht wird.

7. Verfahren nach einem der vorhergehenden Ansprüche, **dadurch gekennzeichnet, daß** die Veränderungen des Hydraulikdruckes mittels eines Drucksensors (27) ermittelt werden.

8. Verfahren nach Anspruch 7, **dadurch gekennzeichnet, daß** die Drucksensorwerte einer Steuereinheit für die geschwindigkeitsabhängig gesteuerte hydraulische Reaktionsvorrichtung zugeführt werden.

9. Verfahren nach einem der Ansprüche 1 bis 6, **dadurch gekennzeichnet, daß** zur Ermittlung der Veränderungen des Hydraulikdrucks ein Druckverhältnisregelventil (31) verwendet wird.

10. Verfahren nach Anspruch 9, **dadurch gekennzeichnet, daß** das Druckverhältnisregelventil (31) zwischen einer systemdruck- und einer reaktionsdruckführenden Leitung angeordnet wird.

11. Verfahren nach einem der Ansprüche 9 oder 10, **dadurch gekennzeichnet, daß** das Druckverhältnisregelventil (31) vom Systemdruck gesteuert wird.

12. Servolenkvorrichtung zum Zuführen von Drucköl an linke und rechte Kammern (20, 21) eines Servozylinders über ein Drehschieberventil (1) mit einer Pumpe (14), wobei zwischen einer Eingangswelle (2) und einer Steuerhülse (5) des Drehschieberventils ein Reaktionskolben (7) eingeschaltet ist, der axialbeweglich und drehfest auf der Eingangswelle (2) gelagert und über eine elastische Drehmitnahme mit der Steuerhülse (5) verbunden ist, wobei in einer vom Reaktionskolben (7) wegführenden Hydraulikmittelrückflußleitung eine von einer Steuereinheit (15) geschwindigkeitsabhängig gesteuerte hydraulische Reaktionseinrichtung zur Regelung des Reaktionsdruckes angeordnet ist, **gekennzeichnet durch** eine Vorrichtung zur Ermittlung von Veränderungen des Hydraulikdruckes zur Ansteuerung der geschwindigkeitsabhängig gesteuerten hydraulischen Reaktionsvorrichtung.

13. Servolenkvorrichtung nach Anspruch 12, **gekennzeichnet durch** eine Vorrichtung zur Ermittlung von Veränderungen des Systemdrucks.

14. Servolenkvorrichtung nach einem der Ansprüche 12 oder 13, **dadurch gekennzeichnet, daß** die Vorrichtung zur Ermittlung von Veränderungen des Hydraulikdrucks ein Druckverhältnisregelventil (31) ist.

15. Servolenkvorrichtung nach Anspruch 14, **dadurch gekennzeichnet, daß** das Druckverhältnisregelventil (31) zwischen einer systemdruck- und einer reaktionsdruckführenden Leitung angeordnet und mit einem drucklosen Hydraulikmittelrücklauf verbunden ist.

16. Servolenkvorrichtung nach einem der Ansprüche 14 oder 15, **gekennzeichnet durch** ein vom Systemdruck gesteuertes Druckverhältnisregelventil (31).

17. Servolenkvorrichtung nach einem der Ansprüche 12 oder 13, **dadurch gekennzeichnet, daß** die Vorrichtung zur Ermittlung von Veränderungen des Hydraulikdrucks ein Drucksensor (27) ist.

18. Servolenkvorrichtung nach Anspruch 17, **dadurch gekennzeichnet, daß** der Drucksensor in einer Systemdruckleitung (26) angeordnet ist.

19. Servolenkvorrichtung nach einem der Ansprüche 17 oder 18, **dadurch gekennzeichnet, daß** der Drucksensor (27) mit einer Steuereinheit (15) verbunden ist.

20. Servolenkvorrichtung nach Anspruch 19, **dadurch gekennzeichnet, daß** die Steuereinheit (15) Steuersignale in Abhängigkeit von der Geschwindigkeit und der Veränderungen des Systemdrucks erzeugt.

## Claims

1. Method of controlling the hydraulic pressure in a power steering device for feeding pressure oil to left and,right chambers (20, 21) of a servo cylinder via a rotary slide valve (1) having a pump (14), wherein there is interpolated between an input shaft (2) and a control sleeve (5) of the rotary slide valve, a reaction piston (7) which is mounted on the input shaft in an axially movable and torsion-proof manner and is connected to the control sleeve (5) via an elastic rotary entrainment means, and wherein a hydraulic reaction apparatus for regulating the reaction pressure, which apparatus is controlled in a speed-dependent manner by a control unit (15), is disposed in a hydraulic medium reflux line leading away from the reaction piston (7),
**characterised in that**
the variations in the hydraulic pressure are ascertained and used, in addition to the speed parameter, as control parameters for the hydraulic reaction device which is controlled in a speed-dependent manner.

2. Method according to claim 1, **characterised in that** the variations in the system pressure are ascertained.

3. Method according to one of the preceding claims, **characterised in that** the hydraulic reaction device which is controlled in a speed-dependent manner is rendered inoperative when the system pressure falls or corresponds to the reaction pressure.

4. Method according to claim 3, **characterised in that** the hydraulic reaction device which is controlled in a speed-dependent manner is rendered inoperative by bypassing.

5. Method according to claim 3, **characterised in that**, in the event of use being made of an electrohydraulic reaction device which is controlled by the speed, the said device is rendered inoperative by interrupting the current supply.

6. Method according to one of the preceding claims, **characterised in that** the hydraulic reaction device which is controlled in a speed-dependent manner is rendered operative when the system pressure rises.

7. Method according to one of the preceding claims, **characterised in that** the variations in the hydraulic pressure are ascertained by means of a pressure sensor (27).

8. Method according to claim 7, **characterised in that** the pressure sensor values are fed to a control unit for the hydraulic reaction device which is controlled in a speed-dependent manner.

9. Method according to one of claims 1 to 6, **characterised in that** a pressure ratio-regulating valve (31) is used for ascertaining the variations in the hydraulic pressure.

10. Method according to claim 9, **characterised in that** the pressure ratio-regulating valve (31) is disposed between a line carrying system pressure and a line carrying reaction pressure.

11. Method according to one of claims 9 or 10, **characterised in that** the pressure ratio-regulating valve (31) is controlled by the system pressure.

12. Power steering device for feeding pressure oil to left and right chambers (20, 21) of a servo cylinder via a rotary slide valve (1) having a pump (14), wherein there is interpolated between an input shaft (2) and a control sleeve (5) of the rotary slide valve, a reaction piston (7) which is mounted on the input shaft (2) in an axially movable and torsion-proof manner and is connected to the control sleeve (5) via an elastic rotary entrainment means, and wherein a hydraulic reaction apparatus for regulating the reaction pressure, which apparatus is controlled in a speed-dependent manner by a control unit (15), is disposed in a hydraulic medium reflux line leading away from the reaction piston (7), **characterised by** a device for ascertaining variations in the hydraulic pressure for the purpose of activating the hydraulic reaction device which is controlled in a speed-dependent manner.

13. Power steering device according to claim 12, **characterised by** a device for ascertaining variations in the system pressure.

14. Power steering device according to one of claims 12 or 13, **characterised in that** the device for ascertaining variations in the hydraulic pressure is a pressure ratio-regulating valve (31).

15. Power steering device according to claim 14, **characterised in that** the pressure ratio-regulating valve (31) is disposed between a line carrying system pressure and a line carrying reaction pressure, and is connected to a pressure-less hydraulic medium return.

16. Power steering device according to one of claims 14 or 15, **characterised by** a pressure ratio-regulating valve (31) which is controlled by the system pressure.

17. Power steering device according to one of claims 12 or 13, **characterised in that** the device for ascertaining variations in the hydraulic pressure is a pressure sensor (27).

18. Power steering device according to claim 17, **characterised in that** the pressure sensor is disposed in a system pressure line (26).

19. Power steering device according to one of claims 17 or 18, **characterised in that** the pressure sensor (27) is connected to a control unit (15).

20. Power steering device according to claim 19, **characterised in that** the control unit (15) generates control signals in dependence upon the speed and the variations in the system pressure.

## Revendications

1. Procédé de commande de la pression hydraulique dans un système de direction assistée destiné à acheminer l'huile sous pression au moyen d'une pompe (14) vers des compartiments (20, 21) droit et gauche d'un vérin assisté, par l'intermédiaire d'une vanne rotative (1), sachant qu'entre une tige d'entrée (2) et un manchon de commande (5) de la vanne rotative est monté un piston à réaction (7), qui est logé de manière mobile dans le sens axial et immobilisé en rotation sur la tige d'entrée (2) et est relié au manchon de commande (5) par l'intermédiaire d'un taquet d'entraînement rotatif élastique, sachant que dans une conduite de retour du fluide hydraulique qui part du piston à réaction (7) est agencé un dispositif à réaction hydraulique, commandé en fonction de la vitesse par une unité de commande (15) et destiné à réguler la pression de réaction, **caractérisé en ce que** les variations de la pression hydraulique sont déterminées et utilisées comme paramètres de commande, en plus du paramètre vitesse, pour le dispositif à réaction hydraulique commandé en fonction de la vitesse.

2. Procédé selon la revendication 1, **caractérisé en ce que** les variations de la pression du système sont déterminées.

3. Procédé selon une des revendications précédentes, **caractérisé en ce que** le dispositif à réaction hydraulique commandé en fonction de la vitesse est inactivé lorsque la pression du système chute ou lorsqu'elle est égale à la pression de réaction.

4. Procédé selon la revendication 3, **caractérisé en ce que** le dispositif à réaction hydraulique commandé en fonction de la vitesse est inactivé par dérivation.

5. Procédé selon la revendication 3, **caractérisé en ce que**, en cas d'utilisation d'un dispositif à réaction électro-hydraulique commandé par la vitesse, celui-ci est inactivé par l'interruption de l'alimentation en courant.

6. Procédé selon une des revendications précédentes, **caractérisé en ce que** le dispositif à réaction hydraulique commandé en fonction de la vitesse est activé lorsque la pression du système augmente.

7. Procédé selon une des revendications précédentes, **caractérisé en ce que** les variations de la pression hydraulique sont déterminées au moyen d'un capteur de pression (27).

8. Procédé selon la revendication 7, **caractérisé en ce que** les valeurs du capteur de pression sont acheminées vers une unité de commande pour le dispositif à réaction hydraulique commandé en fonction de la vitesse.

9. Procédé selon une des revendications 1 à 6, **caractérisé en ce qu'**on utilise un régulateur proportionnel de pression (31) pour déterminer les variations de la pression hydraulique.

10. Procédé selon la revendication 9, **caractérisé en ce que** le régulateur proportionnel de pression (31) est disposé entre une conduite de passage de la pression du système et une conduite de passage de la pression de réaction.

11. Procédé selon la revendication 9 ou 10, **caractérisé en ce que** le régulateur proportionnel de pression (31) est commandé par la pression du système.

12. Dispositif à direction assistée destiné à acheminer l'huile sous pression au moyen d'une pompe (14) vers des compartiments (20, 21) droits et gauches d'un vérin assisté, par l'intermédiaire d'une vanne rotative (1), sachant qu'entre une tige d'entrée (2) et un manchon de commande (5) de la vanne rotative est monté un piston à réaction (7), qui est logé de manière mobile dans le sens axial et immobilisé en rotation sur la tige d'entrée (2) et est relié au manchon de commande (5) par l'intermédiaire d'un taquet d'entraînement rotatif élastique, sachant que dans une conduite de retour du fluide hydraulique qui part du piston à réaction (7) est agencé un dispositif à réaction hydraulique, qui est commandé en fonction de la vitesse par une unité de commande (15) et qui est destiné à réguler la pression de réaction, **caractérisé par** un dispositif destiné à déterminer les variations de la pression hydraulique pour activer le dispositif à réaction hydraulique commandé en fonction de la vitesse.

13. Dispositif à direction assistée selon la revendication 12, **caractérisé par** un dispositif destiné à déterminer les variations de la pression du système.

14. Dispositif à direction assistée selon la revendication 12 ou 13, **caractérisé en ce que** le dispositif destiné à déterminer les variations de la pression hydraulique est un régulateur proportionnel de pression (31).

15. Dispositif à direction assistée selon la revendication 14, **caractérisé en ce que** le régulateur proportionnel de pression (31) est disposé entre une conduite de passage de la pression du système et une conduite de passage de la pression de réaction et est relié à une conduite de retour sans pression du fluide hydraulique.

16. Dispositif à direction assistée selon la revendication 14 ou 15, **caractérisé par** un régulateur proportionnel de pression (31) commandé par la pression du système.

17. Dispositif à direction assistée selon la revendication 12 ou 13, **caractérisé en ce que** le dispositif destiné à déterminer les variations de la pression hydraulique est un capteur de pression (27).

18. Dispositif à direction assistée selon la revendication 17, **caractérisé en ce que** le capteur de pression est disposé dans une conduite de passage de la pression du système (26).

19. Dispositif à direction assistée selon la revendication 17 ou 18, **caractérisé en ce que** le capteur de pression (27) est relié à une unité de commande (15).

20. Dispositif à direction assistée selon la revendication 19, **caractérisé en ce que** l'unité de commande (15) génère des signaux de commande en fonction de la vitesse et des variations de la pression du système.
